(19) **Europäisches Patentamt European Patent Office Office européen des brevets**

(11) **EP 4 621 565 A1**

(12) **EUROPEAN PATENT APPLICATION**

(43) Date of publication:
24.09.2025 Bulletin 2025/39

(21) Application number: 25163516.5

(22) Date of filing: **13.03.2025**

(51) International Patent Classification (IPC):
*G06F 9/4401* (2018.01)     *G06F 1/3246* (2019.01)
*H04N 1/00* (2006.01)

(52) Cooperative Patent Classification (CPC):
**G06F 9/442; G06F 9/4403;** G06F 1/3246

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.03.2024 JP 2024043836**

(71) Applicant: CASIO COMPUTER CO., LTD.
**Tokyo 151-8543 (JP)**

(72) Inventors:
• **Mayuzumi, Kouki**
  **Hamura-shi, Tokyo, 205-8555 (JP)**
• **Yamada, Shunsuke**
  **Hamura-shi, Tokyo, 205-8555 (JP)**
• **Hasegawa, Hirozaki**
  **Hamura-shi, Tokyo, 205-8555 (JP)**

(74) Representative: **Grünecker Patent- und Rechtsanwälte PartG mbB Leopoldstraße 4 80802 München (DE)**

(54) **CONTROL DEVICE, CONTROL METHOD AND PROGRAM**

(57)     An object is to express a more natural pseudo-growth of a robot even after a power-off period. A control device (100) includes a control section (110) which updates number of pseudo-days elapsed after birth of a device (200), on condition that time elapsed from activation of the device (200) has satisfied a predetermined condition, stores the number of pseudo-days elapsed after the birth and acquired at power off timing of the device (200), in response to power-off of the device (200), and restarts update of the number of pseudo-days elapsed after the birth with the stored number of pseudo-days elapsed after the birth as a starting point, in response to reboot of the device (200).

FIG. 1

## Description

### BACKGROUND

1. Technical Field

The present disclosure relates to a control device, a control method and a program.

2. Description of the Related Art

In recent years, a robot aiming to communicate with a user has been developed. In this type of robot, the time elapsed after its initial startup is occasionally used as a parameter that expresses the degree of pseudo-growth of the robot (for example, refer to Japanese Patent Application Laid-Open (Kokai) Publication No. 2003-285286).

In the case of the above-described robot, its main power supply is occasionally turned off for a long period of time. With the technique described in Japanese Patent Application Laid-Open (Kokai) Publication No. 2003-285286, even when the main power supply of the robot is turned off for a long period of time, the built-in clock thereof does not stop counting, by which the robot undesirably keeps on growing. Accordingly, there is a problem in that when the power is turned on again and the user sees a grown robot, which causes the user a sense of discomfort.

An object of the present disclosure is to express a more natural pseudo-growth of a robot even after a power-off period.

### SUMMARY

An embodiment of the present disclosure is a control device comprising a control section which: updates number of pseudo-days elapsed after birth of a device, on condition that time elapsed from activation of the device has satisfied a predetermined condition; stores the number of pseudo-days elapsed after the birth and acquired at power off timing of the device, in response to power-off of the device; and restarts update of the number of pseudo-days elapsed after the birth with the stored number of pseudo-days elapsed after the birth as a starting point, in response to reboot of the device.

Another embodiment of the present disclosure is a control method by a control section of a device, comprising: a step of updating number of pseudo-days elapsed after birth of the device, on condition that time elapsed from activation of the device has satisfied a predetermined condition; a step of storing the number of pseudo-days elapsed after the birth and acquired at power off timing of the device, in response to power-off of the device; and a step of restarting update of the number of pseudo-days elapsed after the birth with the stored number of pseudo-days elapsed after the birth as a starting point, in response to reboot of the device.

Another embodiment of the present disclosure is a program that is executable by a computer in a device including a control section to actualize functions comprising: an updating function which updates number of pseudo-days elapsed after birth of the device, on condition that time elapsed from activation of the device has satisfied a predetermined condition; a storing function which stores the number of pseudo-days elapsed after the birth and acquired at power off timing of the device, in response to power-off of the device; and a restarting function which restarts update of the number of pseudo-days elapsed after the birth with the stored number of pseudo-days elapsed after the birth as a starting point, in response to reboot of the device.

According to the present disclosure, a more natural pseudo-growth of a robot can be expected even after a power-off period.

### BRIEF DESCRIPTION OF THE DRAWINGS

FIG. 1 is a block diagram showing a functional configuration of a robot according to a first embodiment of the present disclosure;
FIG. 2 is a flowchart for describing operations in postnatal day count processing for the robot according to the first embodiment;
FIG. 3 is a state transition diagram for describing the operations in the postnatal day count processing for the robot according to the first embodiment;
FIG. 4 is a block diagram showing a functional configuration of a robot according to a second embodiment of the present disclosure;
FIG. 5 is a flowchart for describing operations in postnatal day count processing for the robot according to the second embodiment; and

FIG. 6 is a state transition diagram for describing the operations in the postnatal day count processing for the robot according to the second embodiment.

## DETAILED DESCRIPTION OF THE PREFERRED EMBODIMENTS

<First Embodiment>

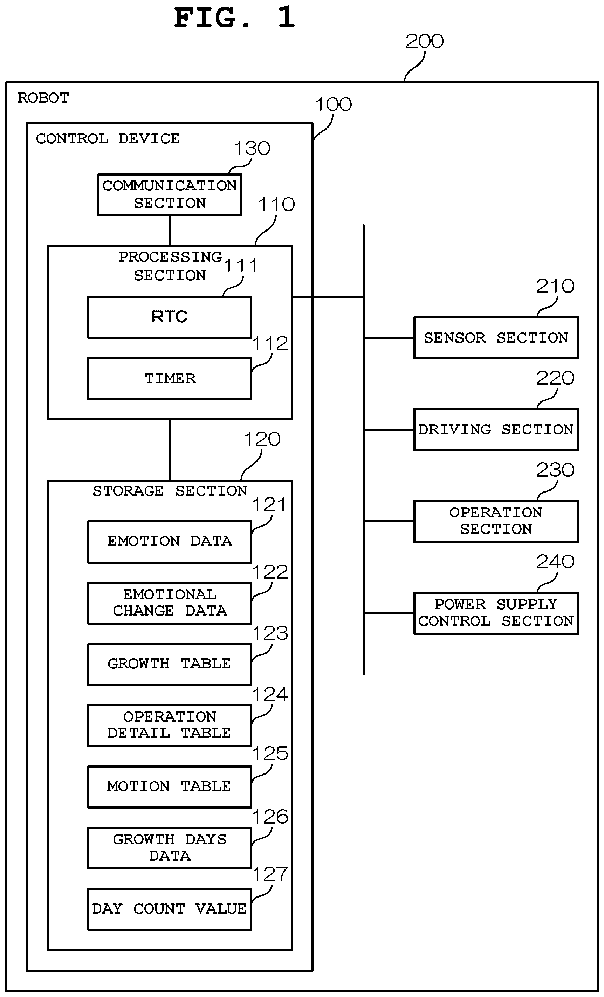

A first embodiment where a control device according to the present disclosure has been applied in a robot will hereinafter be described with reference to FIG. 1 to FIG. 3. This robot 200 of the present embodiment is equipped with a control device 100, a sensor section 210, a driving section 220, an operation section 230, and a power supply control section 240, as shown in FIG. 1. The control device 100 includes a processing section 110, a storage section 120, and a communication section 130. The storage section 120 stores emotion data 121, emotional change data 122, a growth table 123, an operation detail table 124, a motion table 125, growth days data 126, and a day count value 127. Note that the basic structure and motion control of the robot 200 are substantially the same as the publicly known structure and control such as those described in Japanese Patent No. 7192905, and therefore detailed descriptions thereof are omitted. Hereafter, the updating of the growth days data 126 indicating the number of pseudo-days elapsed after the birth of the robot 200 is described.

The processing section 110 controls the motion of the robot 200 which is performed by the driving section 220, on the basis of motion control data corresponding to a motion specified in accordance with an external stimulus detected by the sensor section 210, the growth degree (growth days) of the robot 200, or the like. For example, the robot 200 is set such that, as the number of days after the birth increases, the number of selectable motions is increased. This processing section 110 includes an RTC (Real-Time Clock) 111 and a timer 112. The RTC 111 clocks the actual time ("year", "month", "day" , "hour" , "minute", and "second"). In the descriptions below, "day", "hour", and "minute" are referred to as "calendar date and time" . These calendar date and time are used for calculating the day count value 127 described later. The timer 112 generates an interrupt request at predetermined time intervals (such as ten-minute intervals) after the startup (including initial startup and rebooting) of the robot 200. Each time an interrupt request, which is transmitted at ten-minute intervals, is received from the timer 112, the processing section 110 acquires calendar date and time (day, hour, and minute) from the RTC 111, calculates a current day count value Dnum (described later) on the basis of the calendar date and time by use of a predetermined calculation formula described later, and controls the update of the growth days data 126 on the basis of a result of comparison between the current day count value Dnum and the preceding day count value 127.

The above-described growth days data 126 is a parameter indicating the number of pseudo-days elapsed after the birth of the robot 200 (the number of pseudo-growth days which is updated during a power-on period after the initial startup). In the first embodiment, the initial value of this growth days data 126 is 0. When the power is turned on for the first time, this value is incremented by one (day), and updated (+ 1) on the basis of a result of comparison between the current day count value Dnum and the preceding day count value 127 which is calculated on the basis of the above-described calendar date and time. For example, this growth days data 126 may be incremented by one every actual day. Alternatively, a configuration may be adopted in which, as with a small animal that grows faster than humans, the growth days data 126 is incremented by one (+ 1 day) every half day or quarter day instead of every day. Also, a configuration may be adopted in which, as with an animal that grows slowly, the growth days data 126 is incremented by one (+ 1 day) every four days or ten days. The day count value 127 is a count value that is used to determine the update (+ 1) timing of the above-described growth days data 126. This day count value 127 whose initial value is 0 is calculated every ten minutes while the power of the robot 200 is on, on the basis of the calendar date and time of the RTC 111.

The motion of the robot 200 is determined on the basis of a detection signal in accordance with an external stimulus from the sensor section 210, the value of the growth days data 126, etc. Accordingly, if the growth of the robot 200 progresses during its power-off period (if the growth days data 126 is updated in accordance with the calendar date and time of the RTC 111 without any consideration), the robot 200 appears to have suddenly grown from the user's point of view when the power is turned on (rebooting) , which undesirably makes the user feel that the motion of the robot 200 is unnatural. Thus, the first embodiment controls such that the growth days data 126 is not updated during a power-off period and, when the robot 200 is rebooted, one pseudo-day is counted with the value of the growth days data 126 acquired at the power off timing as a starting point. As a result of this configuration, the progress of the growth of the robot 200 during a power-off period is prevented.

<Operation of the First Embodiment>

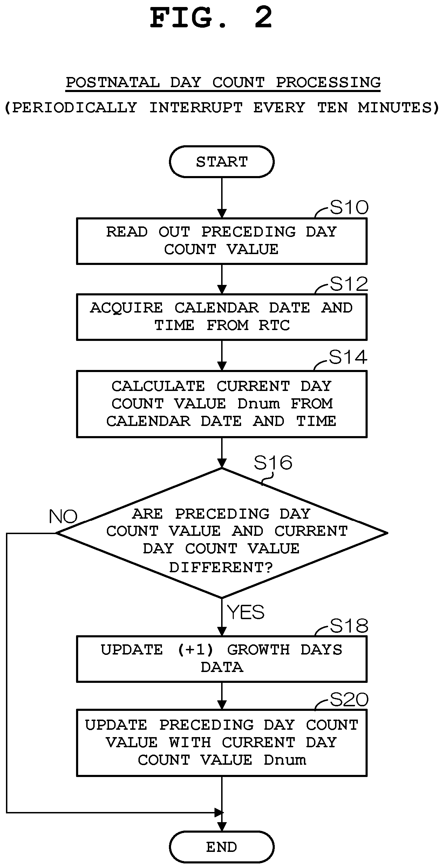

When the user turns on the power of the robot 200, the processing section 110 starts postnatal day count processing in accordance with the flowchart shown in FIG. 2. First, the processing section 110 reads out the preceding day count value 127 from the storage section 120 (Step S10). Also, the processing section 110 acquires calendar date and time from the RTC 111 (Step S12), and calculates the current day count value Dnum from the calendar date and time in accordance with mathematical formula 1 shown below (Step S14).

$$\text{Dnum} = \{(\text{dd} \times 24 \times 60) + (\text{hh} \times 60) + \text{mm}\} / R \ldots (\text{mathematical formula 1})$$

Here, Dnum (which is rounded down to the nearest whole number) is the current day count value, dd is "day" information of the calendar date and time, hh is "hour" information of the calendar date and time, mm is "minute" information of the calendar date and time, and R is a number representing a unit of count (R = 1440; a value representing one pseudo-day of the robot 200 in "minutes"). In the first embodiment, R has been set at 1440 so that one pseudo-day of the robot 200 is equal to one actual day (1440 minutes). Accordingly, the day count value Dnum is increased by "1" each time 1440 minutes, that is, one day elapses.

In other words, the increase frequency of the day count value can be changed by the value of R being changed. For example, by R being set at 2880, the day count value is increased by "1" every two days. Also, by R being set at 5760, the day count value is increased by "1" every four days. Conversely, by R being set at 720, the day count value is increased by "1" every half day. Also, by R being set at 360, the day count value is increased by "1" every quarter of a day. Note that, when R is to be changed, the value corresponding to "24" in the above-described (dd x 24 x 60) is required to be changed in accordance with the value of R. For example, when R is 2880 (every two days) , "24" is changed to "48". When R is 720 (every half day), "24" is changed to "12". That is, the value corresponding to "24" is required to be R/60.

Next, the processing section 110 judges whether or not the preceding day count value 127 and the current day count value Dnum are different from each other (Step S16). When the preceding day count value 127 and the current day count value Dnum are different from each other (YES at Step S16), the processing section 110 updates (+1) the growth days data 126 indicating the number of pseudo-days elapsed after the birth (Step S18), and updates the preceding day count value 127 with the current day count value Dnum (Step S20). This difference between the preceding day count value 127 and the current day count value Dnum indicates that one pseudo-day for the robot 200 has elapsed, that is, timing at which the number of days elapsed after the birth of the robot 200 is updated (+1) has come. Then, the processing section 110 ends the processing.

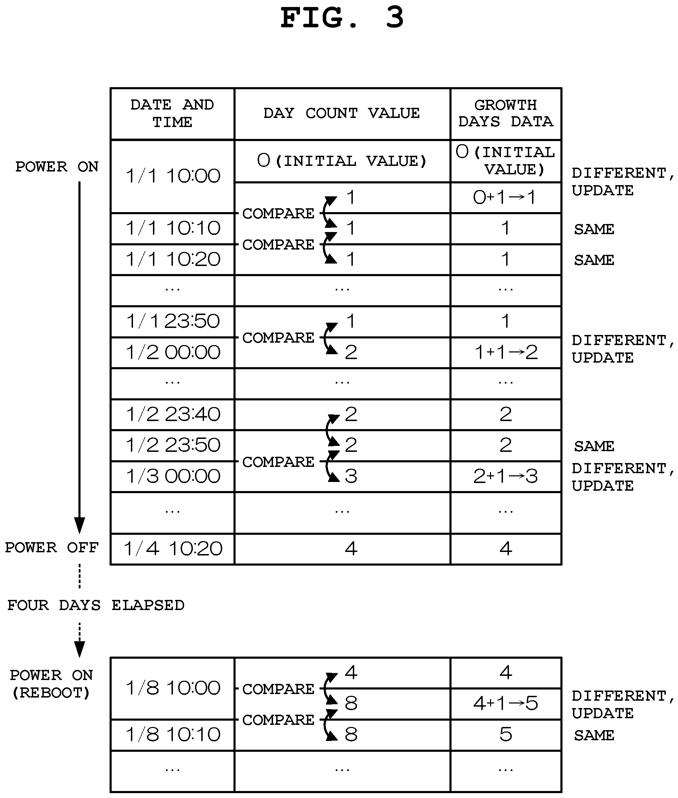

For example, a case is described in which the user has turned on the power for the first time at 10:00 on January 1st, as shown in FIG. 3. Here, the day count value 127 is "0" which is the initial value. Then, the day count value Dnum ({(1 x 24 x 60) + (10 x 60) + 0} / 1440 = 1.406... → "1"), which is "1", calculated in accordance with the above-described mathematical formula 1 from calendar date and time (dd = 1, hh = 10, mm = 0) acquired from the RTC 111 and the preceding day count value (initial value) 127, which is "0", become different from each other. Accordingly, the processing section 110 updates (+1) the growth days data 126, and updates the day count value 127 with "1".

Conversely, when the preceding day count value 127 and the current day count value Dnum are the same (NO at Step S16), the processing section 110 ends the processing. Here, the preceding day count value 127 and the current day count value Dnum being the same indicates that the date has not changed since last time, that is, this processing has been performed on the same day as last time. For example, when the robot 200 is rebooted at 10:00 on January 8th as shown in FIG. 3, the processing section 110 ends the processing without updating the day count value 127 because the day count value 127 has already been set at "4".

The above-described postnatal day count processing shown in FIG. 2 is repeatedly performed at ten-minute intervals by interruption by the timer 112. Each time this processing is repeated, a preceding day count value 127 and a current day count value Dnum are compared with each other. When they are not the same, the growth days data 126 is updated (+1), and the preceding day count value 127 is updated with the current day count value Dnum. As a result, each time one pseudo-day after the birth elapses, the growth days data 126 is updated (+1). Then, when subjected to a turn off operation by the user during the above-described postnatal day count processing, the robot 200 is turned off with the growth days data 126 and the day count value 127 at that point being stored in the storage section 120.

For example, in the case of 10:10 on January 1st, "1" indicated by the preceding day count value 127 and "1" (rounded down to the nearest whole number) indicated by the current day count value Dnum calculated from calendar date and time (dd = 1, hh = 10, mm = 10) are the same, and therefore the growth days data 126 and the day count value 127 are not updated, as shown in FIG. 3. Similarly, in the case of 10:20 on January 1st which is ten minutes after the above-described case, "1" indicated by the preceding day count value 127 and "1" (rounded down to the nearest whole number) indicated by the current day count value Dnum calculated from calendar date and time (dd = 1, hh = 10, mm = 20) are the same, and therefore the growth days data 126 and the day count value 127 are not updated. In addition, in the case of 23:50 on January 1st as well, "1" indicated by the preceding day count value 127 and "1" (rounded down to the nearest whole number) indicated by the current day count value Dnum calculated from calendar date and time (dd = 1, hh = 23, mm = 50) are the same, and therefore the growth days data 126 and the day count value 127 are not updated. That is, the growth days data 126 indicating the number of pseudo-days elapsed after the birth of the robot 200 activated on January 1st is maintained at "1 (day)" until January 1st is over.

Then, at 00:00 on January 2nd, because "1" indicated by the preceding (23:50 on January 1st) day count value 127 and "2" indicated by the current day count value Dnum calculated from calendar date and time (dd = 2, hh = 0, mm = 0) are different from each other, the growth days data 126 indicating the number of pseudo-days elapsed after the birth is updated (+1) to be "2", and the day count value 127 is updated to be "2" indicated by the day count value Dnum. That is, the growth days data 126 indicating the number of pseudo-days elapsed after the birth of the robot 200 activated on January 1st is updated to be "2 (days)" at 0:00 on January 2nd. Also, at 23:50 on January 2nd, "2" indicated by the preceding day count value 127 and "2" indicated by the current day count value Dnum calculated from calendar date and time (dd = 2, hh = 23, mm = 50) are the same. Accordingly, until this 23:50 on January 2nd, the above-described postnatal day count processing is repeated without the growth days data 126 and the day count value 127 being updated. That is, the growth days data 126 indicating the number of pseudo-days elapsed after the birth of the robot 200 activated on January 1st is maintained at "2 (days)" until 23:50 on January 2nd.

Then, at 00:00 on January 3rd which is ten minutes after 23:50 on January 2nd, because "2" indicated by the preceding day count value 127 and "3" indicated by the current day count value Dnum calculated from calendar date and time (dd = 3, hh = 0, mm = 0) are different from each other, the growth days data 126 indicating the number of pseudo-days elapsed after the birth is updated (+1) to be "3", and the preceding day count value 127 is updated to be "3" indicated by the day count value Dnum. That is, the growth days data 126 indicating the number of pseudo-days elapsed after the birth of the robot 200 activated on January 1st is updated to be "3 (days)" at 0:00 on January 3rd. Subsequently, if the user turns off (performs a turn off operation on) the robot 200 at 10:20 on January 4th, "4" indicated by the day count value 127 and "4" indicated by the growth days data 126 are maintained.

Then, if the robot 200 is rebooted at 10:00 on January 8th which is four days after the power off, because "4" indicated by the preceding day count value 127 and "8" indicated by the current day count value Dnum calculated from calendar date and time (dd = 8, hh = 10, mm = 0) are different from each other, the growth days data 126 indicating the number of pseudo-days elapsed after the birth is updated (+1) to be "5", and the preceding day count value 127 is updated to be "8" indicated by the day count value Dnum. That is, the growth days data 126 indicating the number of pseudo-days elapsed after the birth of the robot 200 activated on January 1st and maintained in the ON state from January 1st to January 4th is updated to be "5 (days)" at the rebooted timing. When the robot 20 is rebooted as described above, the preceding day count value acquired at the power off timing and the current count value Dnum acquired at the rebooted timing are compared to each other. Then, when they are different from each other, a judgment is made that the date has changed, whereby the growth days data 126 indicating the number of pseudo-days elapsed after the birth is updated (+1) regardless of the day count value. Conversely, when the preceding day count value and the current count value Dnum are the same, a judgment is made that the date has not changed, whereby the growth days data 126 indicating the number of pseudo-days elapsed after the birth is maintained without being updated.

Then, at 10:10 which is ten minutes after the rebooting, because "8" indicated by the preceding day count value 127 and "8" indicated by the current day count value Dnum calculated from the calendar date and time (dd = 8, hh = 10, mm = 10) are the same, the growth days data 126 indicating the number of pseudo-days elapsed after the birth and the day count value 127 are not updated, and the same operation is repeated hereafter. As such, by the control being performed such that the growth days data 126 is not updated during the power-off period, the pseudo-growth of the robot 200 during the power-off period is prevented from progressing.

According to the above-described first embodiment, the updating of the growth days data 126 indicating the number of pseudo-days elapsed after the birth is stopped during a power-off period. Then, when the robot 20 is rebooted, the growth days data 126 indicating the number of pseudo-days elapsed after the initial startup is updated with the growth days data 126 acquired at the power off timing and indicating the number of pseudo-days elapsed after the birth as a starting point, on the basis of a comparison between the day count value Dnum calculated from the calendar date and time of the RTC 111 and the preceding day count value 127. As a result of this configuration, for example, even in a case where the user always turns off the power after playing with the robot 200 for five hours, or always turns off the power after playing with the robot 200 for five hours and charges the battery, the growth of the robot 200 expected by the user and the growth of the robot 200 automatically updated match, whereby a more natural growth can be expected that does not give the user a sense of discomfort.

Also, for example, even when the robot 200 powers down by its battery voltage dropping, even when the calendar date and time is returned to the initial value by the battery voltage dropping lower than a predetermined value and the RTC 111 being reset, or even when the calendar date and time of the RTC 111 is corrected to the actual date and time by the robot 200 being connected to the user's smartphone, the growth of the robot 200 expected by the user and the growth of the robot 200 automatically updated match, whereby a more natural growth can be expected that does not give the user a sense of discomfort.

<Second Embodiment>

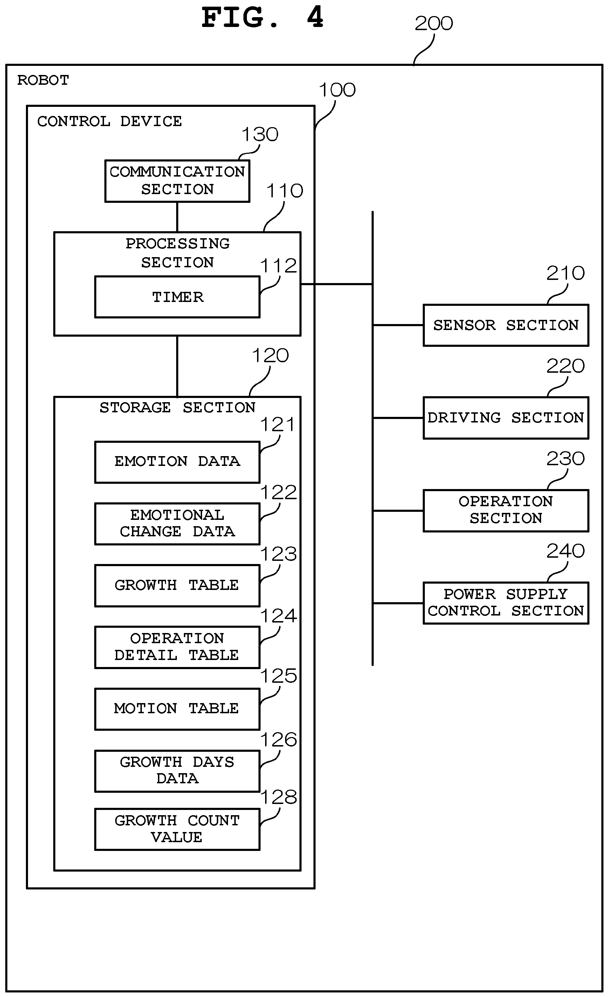

A second embodiment where a control device according to the present disclosure has been applied in a robot will hereinafter be described with reference to FIG. 4 to FIG. 6. Note that sections corresponding those of FIG. 1 are given the same reference numerals and descriptions thereof are omitted. In the robot 200 shown in FIG. 4, the storage section 120 has a growth count value 128 instead of the day count value 127. The processing section 110 acquires the time elapsed after the initial startup from the timer 112, and increments the growth count value 128 by one every ten minutes. Then, when the growth count value 128 reaches a predetermined value (such as 144 (10 minutes x 144 = 1440 minutes = 24 hours) in a configuration where one pseudo-day after the birth is equal to one actual day, which is used as the predetermined value described below) , the processing section 110 updates (+1) the growth days data 126 indicating the number of pseudo-days elapsed after the birth of the robot 200. As such, the growth count value 128 indicates the time elapsed after the initial startup of the robot 200. By "144" of this value being changed, the update frequency of the growth days data 126 indicating the number of pseudo-days elapsed after the birth (that is, the growth rate) can be controlled. For example, when "144" is changed to "72" which is its half, the growth days data 126 is updated (+1 (day)) every twelve hours (10 minutes x 72 = 720 minutes). That is, one pseudo day after the birth elapses every actual half day.

<Operation of the Second Embodiment>

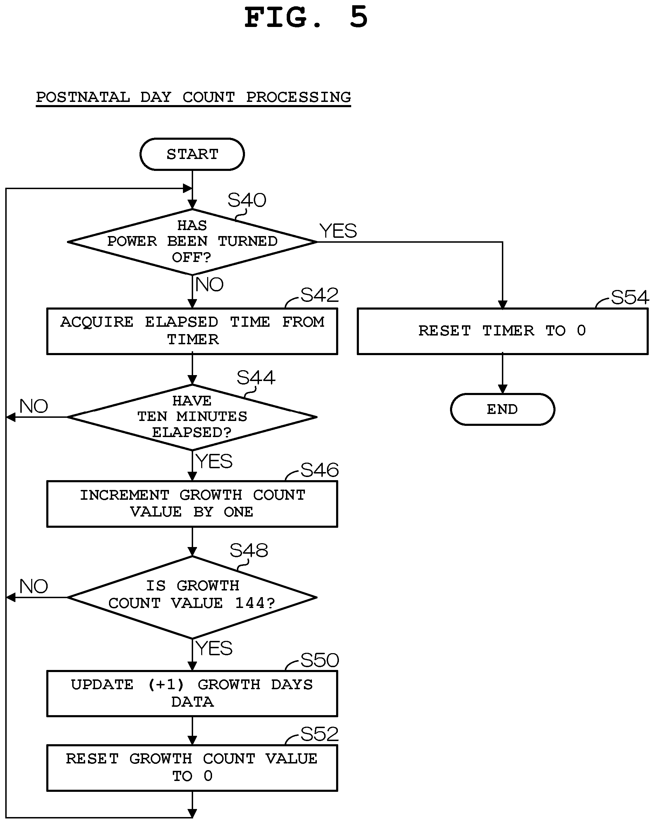

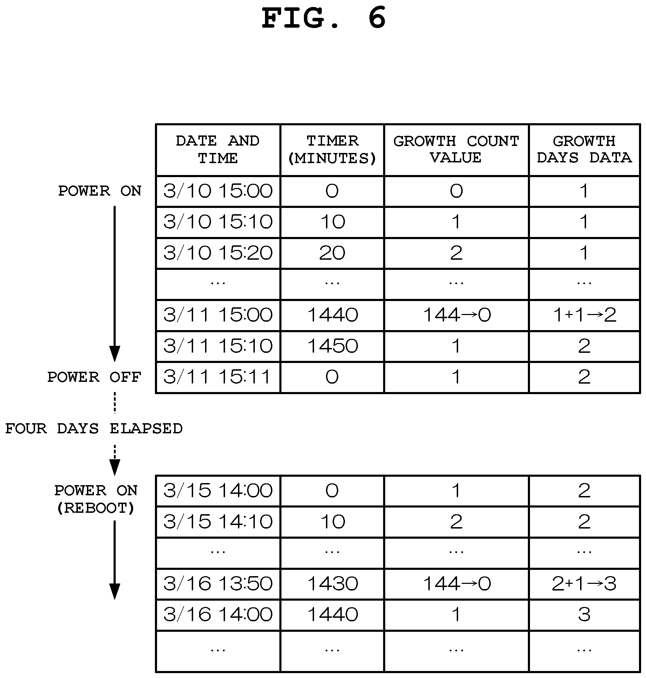

When the user turns on the power of the robot 200, the processing section 110 starts growth days count processing in accordance with the flowchart shown in FIG. 5. Note that, when the power is turned on for the first time, that is, in the case of the initial startup, the timer 112 is "0 (initial value)", the growth count value 128 is "0 (initial value)", and the growth days data 126 indicating the number of pseudo-days elapsed after the birth is "1 (initial value)". Also, when the power is turned on, the timer 112 starts counting the time elapsed after the startup (including initial startup and rebooting).
In the growth days count processing, first, the processing section 110 judges whether or not the power has been turned off (a power off operation has been performed) (Step S40). When judged that the power has not been turned off (no power off operation has been performed) (NO at Step S40), the processing section 110 acquires the time elapsed after the startup from the timer 112 (Step S42). Next, the processing section 110 judges whether or not the time elapsed after the startup has exceeded ten minutes (Step S44). When judged that the time elapsed after the startup has not exceeded ten minutes (NO at Step S44), the processing section 110 returns to Step S40, and repeats the above-described operations until the time elapsed after the startup exceeds ten minute. Then, when the time elapsed after the startup exceeds ten minute (YES at Step S44), the processing section 110 increments the growth count value 128 by one (Step S46), and judges whether or not the growth count value 128 has reached "144" (one day) (Step S48). When the growth count value 128 has not reached "144", that is, when the number of pseudo-days elapsed after the startup has not reached one day (NO at Step S48), the processing section 110 returns to Step S40 to repeat Step S40 to Step S46 described above, and increments the growth count value 128 by one every ten minutes.
Then, when the growth count value 128 reaches "144", that is, when the number of pseudo-days elapsed after the startup reaches one day (YES at Step S48), the processing section 110 updates (+1) the growth days data 126 indicating the number of pseudo-days elapsed after the birth (Step S50), and resets the growth count value 128 to "0" (Step S52). Subsequently, the processing section 110 returns to Step S40 to repeat Step S40 to Step S52 described above, and updates (+1) the growth days data 126 indicating the number of pseudo-days elapsed after the birth every time the growth count value 128 reaches "144" (one day elapses).
At Step S40, when the user turns off the power (performs a power off operation) in the above-described update processing for the growth days data 126 (YES at Step S40), the processing section 110 resets the timer 112 to "0" (Step S54), and ends the processing.
Then, when the robot 200 is rebooted by the user, the processing section 110 reruns to the above-described postnatal day count processing in accordance with the flowchart shown in FIG. 5. At the time of the rebooting, the growth days data 126 and the growth count value 128 have values acquired at the power off timing. Accordingly, in the postnatal day count processing after the rebooting, the growth days data 126 is updated with the value of the growth days data 126 stored at the power off timing as a starting point. This growth days data 126 indicating the number of pseudo-days after the birth is updated (+1) every time the growth count value 128 reaches "144" (one day elapses).
For example, when the initial startup is performed at 15:00 on March 10th, the timer 112 starts clocking the time elapsed after the startup, as shown in FIG. 6. Here, at the initial startup, the growth count value 128 is "0" which is an initial value, and the growth days data 126 is "1" which is also an initial value. Next, at 15:10 which is ten minutes after the initial startup, the growth count value 128 is incremented by one to be "1". However, the growth days data 126 is maintained at "1" since the growth count value 128 has not reached "144". Then, at 15:20 which is ten minutes after 15:10, the growth count value 128 is incremented by one to be "2". However, in this case as well, the growth days data 126 is maintained at "1" since the growth count value 128 has not reached "144". Thereafter, the growth count value 128 is similarly incremented by one every ten minutes, and the growth days data 126 is maintained at "1" until the growth count value 128 reaches "144". That is, the growth days data 126 indicating the number of pseudo-days elapsed after the birth of the robot 200 activated on March 10th is maintained at "1 (day)" during March 10th.

Then, when the time reaches 15:00 on March 11th with the power being on, the growth count value 128 reaches "144" by 1440 minutes elapsing after the startup. When the growth count value 128 reaches "144", the growth days data 126 is updated (+1), so that 1 + 1 → "2". That is, the growth days data 126 indicating the number of pseudo-days elapsed after the birth of the robot 200 activated on March 10th is updated to be "2 (days)" at 15:00 on March 11th which is one day after March 10th. In addition to this update, the growth count value 128 is reset to be "1". Then, if the user turns off (performs a turn off operation on) the robot 200 at 15:11 on March 11th, the timer 112 is reset (to be 0), and "1" of the growth count value 128 and "2 (days)" of the growth days data 126 indicating the number of pseudo-days elapsed after the birth are maintained.

Then, at 14:00 on March 15 which is four days after the power off, the user turns on the robot 200 again, or in other words, reboots the robot 200. Here, the growth count value 128 has been maintained at "1" and the growth days data 126 has been maintained at "2 (days)". Accordingly, at 14:10 on the same date which is ten minutes after the reboot, the growth count value 128 is incremented by one to be "2". However, the growth days data 126 is not updated and maintained at "2" because the growth count value 128 has not reached "144". This state where the growth days data 126 is "2" is not updated until the next time the growth count value 128 reaches "144", that is, until 1430 minutes (1440 minutes if the above-described 10 minutes before the power off is added) elapse after the startup, at 13:50 on March 16. Consequently, the robot 200 has not grown during the four days of the power-off period, and therefore the number of pseudo-days elapsed after the birth is a total of "2 (days)" including "1 (day)" from the initial startup at 15:00 on March 10th to 14:50 on March 11th and "1 (day)" from 15:00 on March 11th to 13:40 on March 16th after the reboot with the power-off period therebetween. Then, at 13:50 on March 16th which is virtually the third day after the initial startup, the growth days data 126 is updated to be "3 (days)".

According to the above-described second embodiment, the growth count value 128 is incremented by one every ten minutes after the startup of the robot 200, and the growth days data 126 indicating the number of pseudo-days elapsed after the birth of the robot 200 is updated (+1) every time the growth count value 128 reaches a predetermined value (such as 1 day = 144). The update of the growth days data 126 indicating the number of pseudo-days elapsed after the birth of the robot 200 is stopped during the power-off period. Then, when the robot 200 is rebooted, the growth days data 126 indicating the number of pseudo-days elapsed after the initial startup is updated (+1) with the growth days data 126 acquired at the power off timing and indicating the number of pseudo-days elapsed after the birth as a starting point, on the basis of the growth count value 128. As a result of this configuration, the growth of the robot 200 expected by the user and the growth of the robot 200 automatically updated match, whereby a more natural growth can be expected that does not give the user a sense of discomfort.

Also, it goes without saying that the detailed structure and detailed operation of each component of the robot 200 in the above-described embodiments can be appropriately changed within the scope of the present invention.

**Claims**

1. A control device (100) comprising a control section (110) which:

   updates number of pseudo-days elapsed after birth of a device (200), on condition that time elapsed from activation of the device (200) has satisfied a predetermined condition;
   stores the number of pseudo-days elapsed after the birth and acquired at power off timing of the device (200), in response to power-off of the device (200); and
   restarts update of the number of pseudo-days elapsed after the birth with the stored number of pseudo-days elapsed after the birth as a starting point, in response to reboot of the device (200).

2. The control device (100) according to claim 1, wherein the control section (110) (i) calculates a count value corresponding to the time elapsed from the activation on basis of actual date and time information, while the power of the device (200) is on, and (ii) judges that the predetermined condition has been satisfied and updates the number of pseudo-days elapsed after the birth, once update timing of the number of pseudo-days elapsed after the birth is judged to have come on basis of change in the count value.

3. The control device (100) according to claim 2, wherein the control section (110) compares a count value calculated a predetermined time earlier with a currently calculated count value, and judges that the update timing has come in a case where the count value calculated the predetermined time earlier and the currently calculated count value are different from each other.

4. The control device (100) according to claim 3, wherein the control section (110) (i) compares a count value acquired at power off timing with a count value acquired at rebooted timing, in response to reboot of the device (200), (ii) judges that a date has changed and updates the number of pseudo-days elapsed after the birth irrespective of number of days between the power off timing and the reboot, in a case where the count value acquired at the power off timing and the count value acquired at the rebooted timing are different from each other, and (iii) judges that a date has not changed and maintains the number of pseudo-days elapsed after the birth, in a case where the count value acquired at the power off timing and the count value acquired at the rebooted timing are same.

5. The control device (100) according to claim 1, wherein the control section (110) judges that the predetermined condition has been satisfied and updates the number of pseudo-days elapsed after the birth, once a count value acquired by counting the time elapsed from the activation at predetermined time intervals is judged to have reached a predetermined value.

6. The control device (100) according to claim 1, wherein the control section (110) controls operations of the device (200) on basis of the number of pseudo-days elapsed after the birth.

7. A control method by a control section (110) of a device (200), comprising:

   a step of updating number of pseudo-days elapsed after birth of the device (200), on condition that time elapsed from activation of the device (200) has satisfied a predetermined condition;
   a step of storing the number of pseudo-days elapsed after the birth and acquired at power off timing of the device (200), in response to power-off of the device (200); and
   a step of restarting update of the number of pseudo-days elapsed after the birth with the stored number of pseudo-days elapsed after the birth as a starting point, in response to reboot of the device (200).

8. A program that is executable by a computer in a device (200) including a control section (110) to actualize functions comprising:

   an updating function which updates number of pseudo-days elapsed after birth of the device (200), on condition that time elapsed from activation of the device (200) has satisfied a predetermined condition;
   a storing function which stores the number of pseudo-days elapsed after the birth and acquired at power off timing of the device (200), in response to power-off of the device (200); and
   a restarting function which restarts update of the number of pseudo-days elapsed after the birth with the stored number of pseudo-days elapsed after the birth as a starting point, in response to reboot of the device (200).

# FIG. 1

# FIG. 2

POSTNATAL DAY COUNT PROCESSING
(PERIODICALLY INTERRUPT EVERY TEN MINUTES)

START

S10
READ OUT PRECEDING DAY
COUNT VALUE

S12
ACQUIRE CALENDAR DATE AND
TIME FROM RTC

S14
CALCULATE CURRENT DAY
COUNT VALUE Dnum FROM
CALENDAR DATE AND TIME

S16
ARE PRECEDING DAY
COUNT VALUE AND CURRENT
DAY COUNT VALUE
DIFFERENT?

NO

YES

S18
UPDATE (+1) GROWTH DAYS
DATA

S20
UPDATE PRECEDING DAY COUNT
VALUE WITH CURRENT DAY
COUNT VALUE Dnum

END

# FIG. 3

| DATE AND TIME | DAY COUNT VALUE | GROWTH DAYS DATA | |
|---|---|---|---|
| 1/1 10:00 | 0 (INITIAL VALUE) | 0 (INITIAL VALUE) | DIFFERENT, UPDATE |
| | COMPARE 1 | 0+1→1 | |
| 1/1 10:10 | 1 | 1 | SAME |
| | COMPARE 1 | 1 | |
| 1/1 10:20 | 1 | 1 | SAME |
| ... | ... | ... | |
| 1/1 23:50 | 1 | 1 | DIFFERENT, UPDATE |
| | COMPARE 1 | | |
| 1/2 00:00 | 2 | 1+1→2 | |
| ... | ... | ... | |
| 1/2 23:40 | 2 | 2 | |
| 1/2 23:50 | 2 | 2 | SAME |
| | COMPARE 2 | | |
| 1/3 00:00 | 3 | 2+1→3 | DIFFERENT, UPDATE |
| ... | ... | ... | |
| 1/4 10:20 | 4 | 4 | |

POWER ON

POWER OFF

FOUR DAYS ELAPSED

POWER ON (REBOOT)

| DATE AND TIME | DAY COUNT VALUE | GROWTH DAYS DATA | |
|---|---|---|---|
| 1/8 10:00 | COMPARE 4 | 4 | DIFFERENT, UPDATE |
| | COMPARE 8 | 4+1→5 | |
| 1/8 10:10 | 8 | 5 | SAME |
| ... | ... | ... | |

# FIG. 4

200

**ROBOT** 200

**CONTROL DEVICE** 100

**COMMUNICATION SECTION** 130

**PROCESSING SECTION** 110

**TIMER** 112

**STORAGE SECTION** 120

**EMOTION DATA** 121

**EMOTIONAL CHANGE DATA** 122

**GROWTH TABLE** 123

**OPERATION DETAIL TABLE** 124

**MOTION TABLE** 125

**GROWTH DAYS DATA** 126

**GROWTH COUNT VALUE** 128

**SENSOR SECTION** 210

**DRIVING SECTION** 220

**OPERATION SECTION** 230

**POWER SUPPLY CONTROL SECTION** 240

12

# FIG. 5

POSTNATAL DAY COUNT PROCESSING

```
                    ( START )
                        │
                        │              S40
                        ▼
                    ╱ HAS ╲
                ╱ POWER BEEN TURNED ╲────YES────┐
                ╲      OFF?        ╱            │
                    ╲    ╱                       │
                     │NO                         │
                     ▼          S42              ▼          S54
            ┌─────────────────────┐    ┌─────────────────────┐
            │ ACQUIRE ELAPSED TIME │    │  RESET TIMER TO 0   │
            │      FROM TIMER      │    └─────────────────────┘
            └─────────────────────┘               │
                     │          S44                ▼
                     ▼                         ( END )
                  ╱ HAVE ╲
        NO────╱ TEN MINUTES ╲
              ╲   ELAPSED?  ╱
                  ╲    ╱
                   │YES        S46
                   ▼
          ┌─────────────────────┐
          │ INCREMENT GROWTH     │
          │ COUNT VALUE BY ONE   │
          └─────────────────────┘
                   │          S48
                   ▼
                ╱ IS GROWTH ╲
        NO────╱ COUNT VALUE 144? ╲
              ╲              ╱
                   │YES        S50
                   ▼
          ┌─────────────────────┐
          │ UPDATE (+1) GROWTH   │
          │     DAYS DATA        │
          └─────────────────────┘
                   │          S52
                   ▼
          ┌─────────────────────┐
          │ RESET GROWTH COUNT   │
          │     VALUE TO 0       │
          └─────────────────────┘
```

# FIG. 6

POWER ON

| DATE AND TIME | TIMER (MINUTES) | GROWTH COUNT VALUE | GROWTH DAYS DATA |
|---|---|---|---|
| 3/10 15:00 | 0 | 0 | 1 |
| 3/10 15:10 | 10 | 1 | 1 |
| 3/10 15:20 | 20 | 2 | 1 |
| ... | ... | ... | ... |
| 3/11 15:00 | 1440 | 144→0 | 1+1→2 |
| 3/11 15:10 | 1450 | 1 | 2 |
| 3/11 15:11 | 0 | 1 | 2 |

POWER OFF

FOUR DAYS ELAPSED

POWER ON (REBOOT)

| 3/15 14:00 | 0 | 1 | 2 |
|---|---|---|---|
| 3/15 14:10 | 10 | 2 | 2 |
| ... | ... | ... | ... |
| 3/16 13:50 | 1430 | 144→0 | 2+1→3 |
| 3/16 14:00 | 1440 | 1 | 3 |
| ... | ... | ... | ... |

## EUROPEAN SEARCH REPORT

**Application Number**

EP 25 16 3516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/265535 A1 (BEST STEVE [US] ET AL) 22 October 2009 (2009-10-22) * paragraph [0031] - paragraph [0054] * ----- | 1-8 | INV. G06F9/4401 G06F1/3246 H04N1/00 |
| A | US 2022/297307 A1 (HASEGAWA HIROKAZU [JP] ET AL) 22 September 2022 (2022-09-22) * paragraph [0066] - paragraph [0194] * ----- | 1-8 | |

**TECHNICAL FIELDS SEARCHED (IPC)**

G06F
H04N

The present search report has been drawn up for all claims

| Place of search | Date of completion of the search | Examiner |
|---|---|---|
| Munich | 24 June 2025 | Kusnierczak, Pawel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P04C01)

**EP 4 621 565 A1**

## ANNEX TO THE EUROPEAN SEARCH REPORT
## ON EUROPEAN PATENT APPLICATION NO.

EP 25 16 3516

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| US 2009265535 A1 | 22-10-2009 | NONE | |
| US 2022297307 A1 | 22-09-2022 | JP 7283495 B2 | 30-05-2023 |
| | | JP 2022142108 A | 30-09-2022 |
| | | JP 2023099625 A | 13-07-2023 |
| | | US 2022297307 A1 | 22-09-2022 |
| | | US 2025144809 A1 | 08-05-2025 |

EPO FORM P0459

For more details about this annex : see Official Journal of the European Patent Office, No. 12/82

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003285286 A

- JP 7192905 B